# FASCICULE DE BREVET EUROPEEN

(11) **EP 4 396 718 B1**
(45) Date de publication et mention de la délivrance du brevet: **24.09.2025**
(21) Numéro de dépôt: 22813676.8
(22) Date de dépôt: 03.11.2022
(51) Int. Cl.: G06F 21/62, G06F 21/64, H04L 9/32, H04L 9/00

(54) **TRAITEMENT DE DONNÉES DE CONSENTEMENT ET STOCKAGE DYNAMIQUE DANS UN REGISTRE DISTRIBUÉ**
VERARBEITUNG VON ZUSTIMMUNGSDATEN UND DYNAMISCHER SPEICHERUNG IN EINEM VERTEILTEN REGISTER
PROCESSING OF CONSENT DATA AND DYNAMIC STORAGE IN A DISTRIBUTED REGISTER

(30) Priorité: 03.11.2021 FR 2111661
(43) Date de publication de la demande: 10.07.2024
(73) Titulaire: DrData SAS, 75002 Paris (FR)
(72) Inventeur: BENYAHIA, Nesrine, 75014 PARIS (FR); EECKELOO, Nicolas, 78740 VAUX-SUR-SEINE (FR); HEDIN, Céline, 78740 VAUX-SUR-SEINE (FR)
(74) Mandataire: Touroude, Magali Linda
(86) Numéro de dépôt international: PCT/FR2022/052068
(87) Numéro de publication internationale: WO 2023/079244

(56) Documents cités:
- US-A1- 2018 082 023
- US-A1- 2019 348 158
- US-A1- 2019 354 693

## Description

La présente invention appartient au domaine de la gestion des données et de base de données, et en particulier la gestion de l'information et du consentement d'un patient relativement à ses données personnelles de santé. Elle concerne en particulier un procédé de traitement de consentement et une plateforme apte à mettre en œuvre un tel traitement.

Elle est particulièrement avantageuse lorsque les données personnelles de santé de différents patients sont utilisées à des fins de recherche scientifique, par exemple en constituant une base de données statistiques.

La dématérialisation des documents et données concerne également le secteur de la santé.

Il est généralement nécessaire de recueillir le consentement d'un patient afin de pouvoir utiliser des données personnelles de santé le concernant, notamment à des fins de recherche, d'étude et d'évaluation scientifique.

Le consentement du patient est difficile à obtenir par voie dématérialisée, notamment lorsqu'une preuve tangible du consentement est nécessaire. Il en va de même de la gestion du refus (ou opposition, ou « opt-out » en anglais) du patient concernant l'utilisation de ses données personnelles de santé. En outre, pour permettre une acceptation ou un refus, il peut être nécessaire d'informer individuellement les patients, ce qui en pratique est très difficile à gérer, notamment lorsque le nombre de patients est élevé.

De ce fait, les données personnelles de santé des patients ne sont souvent pas exploitées et ce malgré leur richesse informationnelle pour des projets de recherche médicale.

La traçabilité des informations échangées avec un patient est donc un enjeu important.

Les solutions existantes prévoient uniquement l'envoi de demandes de consentement et le recueil des consentements, sans permettre de gestion dynamique de ce consentement. Elles ne permettent pas non plus une traçabilité suffisante et inviolable des échanges avec le patient. Par conséquent, ces solutions ne sont pas interopérables avec des bases de données pour gérer un flux dynamique de données personnelles de santé et de données de consentement.

Une solution existante propose notamment une interface sur tablette tactile au sein d'un établissement médical, comprenant un bouton pour que le patient puisse donner son consentement. Non seulement cette solution n'intègre pas de possibilité d'information avec opposition du patient (opt-out) mais elles ne permettent pas de ré-informer le patient à distance notamment dans la granularité de chacune de ses données personnelles de santé utilisées, ni de mise à jour à distance par le patient de ses données de consentement en fonction de ces informations. Les documents US2019/348158, US2018/082023 et US2019/354693 sont considérés comme étant des documents pertinents dans le domaine de traitement de données de consentement d'un patient.

La présente invention vient améliorer la situation. L'invention est définie dans les revendications indépendantes.

A cet effet, un premier aspect de l'invention concerne un procédé de traitement de données de consentement mis en œuvre par une plateforme informatique, et comprenant les opérations suivantes :
- suite au stockage de données personnelles de santé d'un patient dans une base de données, réception d'un identifiant du patient;
- transmission d'une demande de consentement audit patient identifié et ajout d'une information de demande de consentement dans un registre distribué à chaîne de blocs ;
- sur réception de données de consentement du patient, mise à jour d'un statut de consentement correspondant aux données de consentement dans le registre distribué ;
- notification du statut de consentement mis à jour à la base de données.

Les données de consentement du patient comprennent un consentement du patient ou un refus de consentir à l'utilisation des données personnelles de santé dans la base de données.

Le procédé selon l'invention permet ainsi une gestion dynamique du consentement de patients, tout en assurant qu'à tout moment l'information liée au statut du consentement soit accessible dans un registre distribué. L'avantage d'un tel registre est que les données qu'il stocke sont horodatées et sont inviolables. La traçabilité associée à la gestion des données de consentement est ainsi améliorée comparativement aux solutions de l'art antérieur. De telles contraintes techniques sont propres à la gestion du consentement sur l'utilisation de données personnelles de santé. En effet, il est impératif dans le cadre de l'utilisation de ces données de pouvoir démontrer le consentement du patient d'une part, et de permettre au patient de mettre à jour dynamiquement son acceptation ou refus du consentement. En outre, le patient peut consentir ou refuser de consentir de manière différenciée pour chacune des données personnelles de santé le concernant. Le procédé permet ainsi une meilleure granularité dans la gestion des données de consentement. Ainsi, chaque donnée de consentement peut correspondre à une donnée personnelle de santé du patient. Plusieurs statuts de consentement sont alors stockés dans le registre distribué, chaque statut de consentement correspondant à une donnée personnelle de santé parmi les données personnelles de santé du patient.

Selon un mode de réalisation, suite à une réception de premières données de consentement et à une première mise à jour du statut de consentement dans le registre distribué, le procédé peut comprendre en outre une réception de deuxièmes données de consentement différentes des premières données de consentement, et une deuxième mise à jour du statut de consentement dans le registre distribué.

Ainsi, la gestion dynamique du consentement selon l'invention permet au patient de modifier sa réponse à la demande de consentement, et une telle réponse est utilisée pour mettre à jour dynamiquement le statut de consentement stocké dans le registre distribué. Il est ainsi rendu possible d'accéder à l'historique des réponses du patient et de pouvoir accéder à tout moment à un statut de consentement à jour. La traçabilité des échanges est ainsi améliorée.

Selon un premier mode de réalisation, le statut de consentement mis à jour peut être notifié à la base de données suite à une réception d'une demande de statut de consentement de la base de données.

Ainsi, le statut de consentement est accessible sur demande de la base de données, ce qui limite les données stockées relatives au patient par la base de données. De plus, la consultation du registre distribué permet d'obtenir avec certitude le statut de consentement à jour.

Alternativement, ou en complément, le statut de consentement mis à jour peut être notifié à la base de données suite à la mise à jour dans le registre distribué.

Ainsi, à tout moment, la base de données dispose du statut de consentement, ce qui évite l'émission d'une demande de statut de consentement. En cas de doute, le stockage dans le registre distribué permet toutefois de s'assurer que le statut de consentement stocké dans la base de données est bien à jour.

Selon un mode de réalisation, la transmission de la demande de consentement au patient identifié peut être conditionnée par une vérification de conflit d'identité et/ou d'identités multiples du patient.

Ainsi, les échanges entre la plateforme et les autres entités du réseau sont optimisés, les étapes du procédé selon l'invention n'étant mis en œuvre qu'après vérification de l'identité du patient.

Selon un mode de réalisation, en cas de conflit d'identité du patient, une alerte peut être transmise au professionnel, et l'alerte peut proposer une sélection d'une identité unique parmi des identités du patient en conflit.

Ainsi, la sécurité associée à la gestion des données de consentement est renforcée.

En variante ou en complément, en cas d'identités multiples du patient, le procédé peut comprendre en outre une sélection de l'identité du patient comprenant le plus de données par la plateforme.

Ainsi, la sélection d'une identité en cas d'identité multiple est assurée sans nécessiter de contacter le patient. Les échanges de données dans le réseau sont ainsi limités.

Selon un mode de réalisation, le procédé peut comprendre en outre une étape préalable de chargement d'une liste de contacts de patients dans la base de données, et une demande de consentement peut être transmise à chaque patient de la liste de contacts.

Ainsi, il est possible de solliciter plusieurs consentements de patients à partir d'une entrée unique. Le nombre d'interactions avec la base de données, puis entre la base de données et la plateforme, est ainsi limité, ce qui évite une surcharge du réseau.

Un deuxième aspect de l'invention concerne un programme informatique comportant des instructions pour la mise en œuvre du procédé selon le premier aspect de l'invention, lorsque ces instructions sont exécutées par un processeur.

Un troisième aspect de l'invention concerne une plateforme informatique comprenant :
- une première interface réseau apte à recevoir un identifiant du patient depuis une base de données ;
- une deuxième interface réseau apte à transmettre une demande de consentement au patient identifié ;
- un processeur apte à ajouter, via une troisième interface réseau, une information de demande de consentement dans un registre distribué à chaîne de blocs.

La plateforme est en outre apte à recevoir des données de consentement du patient, et le processeur est apte à mettre à jour un statut de consentement correspondant aux données de consentement dans le registre distribué et à notifier le statut de consentement mis à jour à la base de données via la première interface.

Les données de consentement du patient comprennent un consentement du patient ou un refus de consentir à l'utilisation de données personnelles de santé dans la base de données.

D'autres caractéristiques et avantages de l'invention apparaîtront à l'examen de la description détaillée ci-après, et des dessins annexés sur lesquels :
[Fig 1] illustre un système de traitement de données de consentement selon un mode de réalisation de l'invention ;
[Fig 2] est un diagramme illustrant les étapes d'un procédé de traitement de données de consentement, selon un mode de réalisation de l'invention ;
[Fig 3] illustre des étapes d'une vérification de conflits d'identité et d'identités multiples, lors d'un traitement de données de consentement selon un mode de réalisation de l'invention ;
[Fig 4] illustre des étapes de traitements différenciés d'une demande de consentement et d'une notification d'informations, selon un mode de réalisation de l'invention ;
[Fig 5] illustre des étapes de réponse à une demande de consentement ou à une notification d'informations selon un mode de réalisation de l'invention ;
[Fig 6] illustre une structure d'une plateforme numérique selon un mode de réalisation de l'invention.

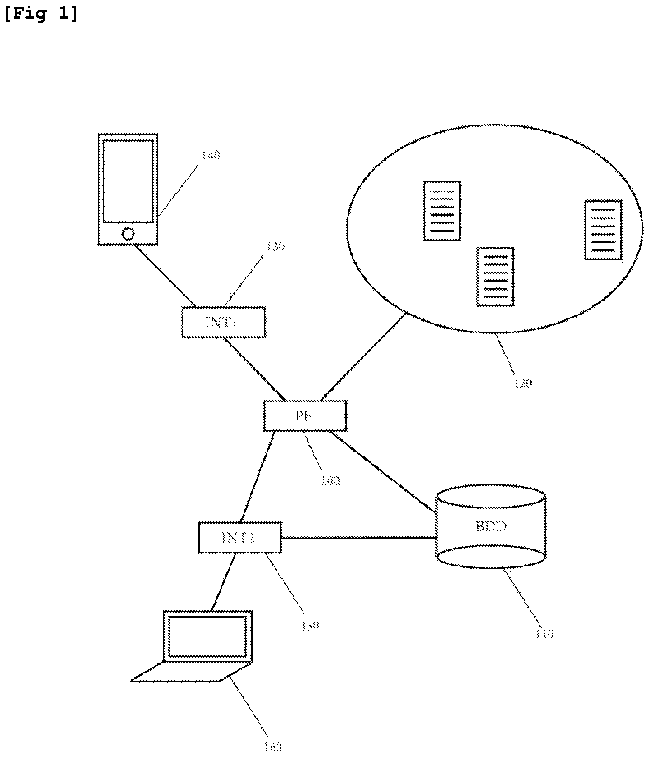

La figure 1 présente un système de traitement de données de consentement, notamment issues de patients, selon un mode de réalisation de l'invention.

Le système comprend une plateforme 100, accessible via un réseau, tel qu'un réseau étendu de type IP par exemple. Le fonctionnement et la structure de la plateforme 100 seront mieux compris à la lecture de ce qui suit.

Le système comprend une base de données 110, également appelée « entrepôt de données » dans ce qui suit, apte à stocker des données et à permettre l'accès à de telles données à des entités externes, notamment à la plateforme 100. Les données stockées dans la base de données 110 comprennent notamment des données personnelles de santé associées à des identifiants de patients. Aucune restriction n'est attachée à de telles données personnelles de santé, qui peuvent comprendre des informations physiologiques, des prescriptions de professionnels de santé, des historiques de consultation, etc.

Le système comprend en outre un registre distribué 120, tel qu'un registre à chaîne de blocs, plus communément appelé Blockchain. Le registre distribué 120 est apte à stocker des données, à horodater de telles données et rendre impossible leur modification a posteriori. Un tel registre 120 est bien connu et ne sera pas détaillé davantage dans la présente description.

Le système selon l'invention comprend en outre une première interface 130 d'accès à la plateforme 100. La première interface d'accès 130 est apte à permettre des échanges de données/informations entre un terminal utilisateur 140 et la plateforme 100.

Aucune restriction n'est attachée à la première interface 130, qui peut être une interface utilisateur dédiée à une application associée à la plateforme 100, ou qui peut, en variante, être un serveur de messages courts, de type SMS, ou un serveur mail. A noter que le système peut comprendre plusieurs premières interfaces 130, notamment une première interface de type serveur mail ou SMS pour une première prise de contact avec un patient, et une autre première interface de type interface d'application pour les échanges subséquents avec le patient.

Le terminal utilisateur 140 est apte à être utilisé par un patient pour accéder à la plateforme 100, et peut comprendre à ce titre tout terminal apte à accéder à un réseau IP, tel qu'une tablette tactile, un Smartphone, un ordinateur portable, un ordinateur de bureau, ou autre.

Le système selon l'invention peut comprendre en outre une deuxième interface 150 d'accès à la plateforme de service 100 et/ou d'accès à la base de données 110. Une telle deuxième interface 150 est accessible par des terminaux utilisateurs 160 de professionnels de santé. La deuxième interface 150 permet à un professionnel de santé ou à une clinique ou hôpital d'ajouter des données personnelles de santé de patients dans la base de données 110. Les données personnelles de santé peuvent être stockées en association avec des identifiants des patients. En outre, le terminal utilisateur 150 peut fournir à la base de données 110 ou à la plateforme 100 une liste de patients pour laquelle le professionnel de santé requiert des données de consentement.

Aucune restriction n'est attachée au terminal utilisateur 160 qui peut être tout terminal apte à accéder à un réseau IP, tel qu'une tablette tactile, un Smartphone, un ordinateur portable, un ordinateur de bureau, ou autre.

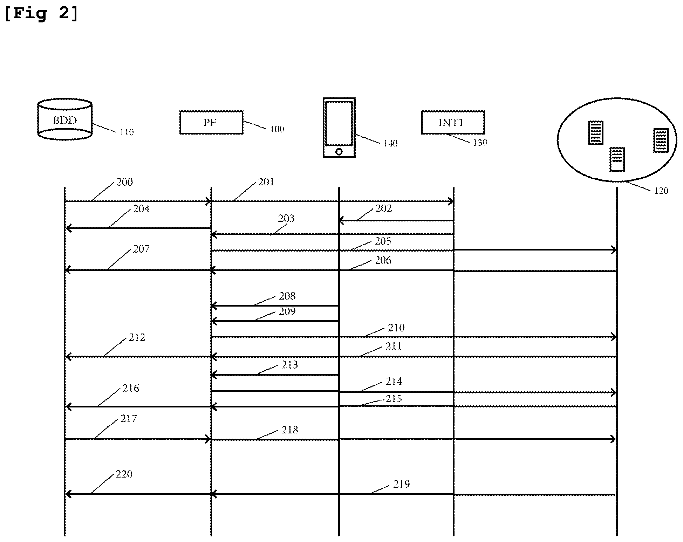

La figure 2 est un diagramme illustrant les étapes d'un procédé de traitement de données de consentement selon un mode de réalisation de l'invention.

La plateforme 100 occupe un rôle central dans la mise en œuvre du procédé selon l'invention et en exécute la plupart des étapes, comme mentionné ci-dessous.

A une étape 200, la plateforme 100 reçoit, depuis la base de données 110, au moins une requête d'obtention de données de consentement pour au moins un patient. A cet effet, la requête peut comprendre un identifiant du patient. En variante, la requête peut comprendre une liste de contacts de patients pour lesquels des données de consentement sont à obtenir.

En variante, la requête est reçue depuis le terminal utilisateur 160 du professionnel de santé, via la deuxième plateforme 150, directement sans passer par la base de données 110.

A une étape 201, la plateforme 100 transmet à la première interface 130 une demande de consentement à au moins un patient identifié dans la requête reçue à l'étape 200. Aucune restriction n'est attachée à une telle transmission, qui peut comprendre l'envoi d'un mail ou d'un SMS. La demande de consentement peut comprendre un lien pour accéder à un portail en ligne ou à une application associée à la plateforme 100. Par exemple, une première interface 130 peut être dédiée à un tel portail ou à une telle application.

A une étape 202, la première interface 130 transmet la demande de consentement au terminal utilisateur 140 du patient.

A une étape 203, la première interface 130 peut transmettre un accusé de réception de la demande de consentement à la plateforme 100, afin d'indiquer que le patient a bien reçu la demande de consentement. Une telle étape permet d'assurer, côté plateforme 100, que l'utilisateur a bien reçu la demande de consentement.

A une étape 204, la plateforme 100 peut confirmer à la base de données 110 qu'une demande de consentement a été envoyée au patient.

A une étape 205, la plateforme 100 ajoute une information de demande de consentement dans le registre distribué 120. Comme expliqué précédemment, les données/informations stockées dans le registre distribué 120 sont horodatées et incorruptibles. Dès lors, il peut être prouvé que la demande de consentement a été envoyée au patient.

A une étape 206, la plateforme 100 reçoit une confirmation de l'ajout de l'information de demande de consentement dans le registre distribué 120. A une étape 207, la plateforme 100 peut notifier la base de données 110 de l'ajout de l'information de demande de consentement dans le registre distribué 120.

A une étape 208, le patient peut s'identifier sur la plateforme 100, via le terminal utilisateur 140. Selon que le patient possède déjà ou non un compte sur la plateforme 100, l'étape 208 peut comprendre la création d'un compte utilisateur ou l'identification/authentification du patient.

Suite à l'étape 208, le patient accède à un espace personnel sur la plateforme 100, et il peut ainsi répondre à la demande de consentement qui lui a été envoyée. La réponse consiste en la sélection de données de consentement parmi une acceptation/un consentement et un refus/opt-out. Chaque donnée de consentement peut correspondre à une seule donnée personnelle de santé, ce qui permet d'améliorer la granularité associée à la gestion du consentement. Ainsi, le patient peut indiquer un refus de consentir pour une donnée personnelle de santé, et un consentement pour une autre donnée personnelle de santé.

A titre illustratif, il est considéré qu'à une étape 209, le patient valide ou accepte la demande de consentement, par exemple pour toutes ses données personnelles de santé. Toutefois, aucune restriction n'est attachée à la séquence de choix effectués par le patient, qui dépend bien entendu de la demande de consentement, des données personnelles de santé du patient, et du patient lui-même.

Sur réception du consentement du patient à l'étape 209, la plateforme 100 met à jour un statut de consentement dans le registre distribué 120 à une étape 210. A noter que plusieurs statuts de consentement différenciés entre plusieurs données personnelles de santé peuvent être mis à jour. Dans l'exemple considéré ici à titre illustratif, le statut mis à jour est un statut d'acceptation du consentement. Le stockage dans le registre distribué 120 permet ainsi une gestion dynamique du consentement, et permet d'authentifier la séquence d'actions mises en œuvre par le patient quant à son consentement.

En variante, les étapes 208 et 209 peuvent être mises en œuvre par l'intermédiaire de la première interface 130.

A une étape 211, la plateforme 100 reçoit une confirmation de la mise à jour du statut de consentement dans le registre distribué 120.

A une étape 212, la plateforme 100 notifie le statut du consentement à la base de données 110, en indiquant notamment le consentement du patient. Le statut des données personnelles de santé dans la base de données 110 peut ainsi être mis à jour, afin que les données personnelles de santé puissent être utilisées, à des fins d'études scientifiques notamment.

A une étape 213, la plateforme 100 reçoit un refus ou opt-out de la part du patient, directement depuis le terminal utilisateur 140, ou via la première interface 140. Aucune restriction n'est attachée à la raison pour laquelle le patient change d'avis quant à son consentement. Le changement du patient peut par exemple faire suite à la réception d'informations relatives à ses données personnelles de santé. A nouveau, le refus peut ne concerner que certaines des données personnelles de santé du patient.

A une étape 214, la plateforme 100 met à jour le statut de consentement dans le registre distribué 120, afin d'indiquer le refus ou l'opt-out du patient. L'invention permet ainsi avantageusement au patient de mettre à jour quand il le souhaite le statut du consentement, pour chaque donnée personnelle de santé, et une telle mise à jour est horodatée et inscrite de manière incorruptible dans le registre distribué 120. Les inconvénients associés aux solutions existantes sont ainsi surmontés.

A une étape 215, la plateforme 100 reçoit une confirmation de la mise à jour du statut de consentement dans le registre distribué 120.

A une étape 216, la plateforme 100 notifie le statut de consentement à la base de données 110, en indiquant notamment le refus du patient. Le statut des données personnelles de santé stockées dans la base de données 110 en association avec le patient peut ainsi être mis à jour, et l'utilisation des données personnelles de santé peut être interrompue.

A une étape 217, la plateforme 100 peut recevoir de la base de données 110 une demande de statut de consentement associée à un ou plusieurs patients, ou à chaque donnée personnelle de santé lorsque les statuts de consentement sont différenciés.

A une étape 218, la plateforme 100, sur réception d'une telle demande, consulte le registre distribué 120. La plateforme 100 consulte soit la dernière mise à jour du statut de consentement, soit obtient l'ensemble de l'historique du patient.

La plateforme 100 en déduit le statut de consentement du patient, ou les statuts de consentement des patients, parmi une acceptation et un refus de consentement.

Le statut de consentement est indiqué par la plateforme 100 à la base de données 110 à une étape 220.

Aucune restriction n'est attachée au moment auquel l'étape 217 est mise en œuvre. Elle peut l'être n'importe quand après la réception de la notification d'ajout de l'étape 207. Les étapes 217 à 220 peuvent également remplacer les étapes 216 et 212 de notification des statuts de consentement. Dans ce cas, la base de données 110 n'accède au statut de consentement d'un patient qu'en mode push, à la demande, ce qui évite à la base de données 110 de stocker les statuts de consentement des patients. Alternativement, les étapes 217 à 220 ne sont pas mises en œuvre, et la base de données 120 stocke les statuts de consentement aux étapes 212 et 216, ce qui réduit l'encombrement du réseau et améliore la réactivité associée à l'obtention du statut de consentement par la base de données 110.

Encore en variante, les étapes 212, 216 et 217 à 220 sont toutes mises en œuvre, ce qui permet à la base de données une double vérification du statut du patient, ce qui est particulièrement avantageux dans le cadre d'informations sensibles telles que des données personnelles de santé.

Aucune restriction n'est attachée à la séquence de mises à jour du statut de consentement faite par le patient, ni au moment auquel une demande de consultation du registre distribuée 120 est faite par la base de données 110. En outre, toutes les étapes d'envoi de confirmations, telles que les étapes 203, 204, 206, 207, 212 et 216 sont optionnelles, bien que permettant une mise à jour dynamique des différentes entités du système selon l'invention, et ainsi une information symétrique entre ces entités.

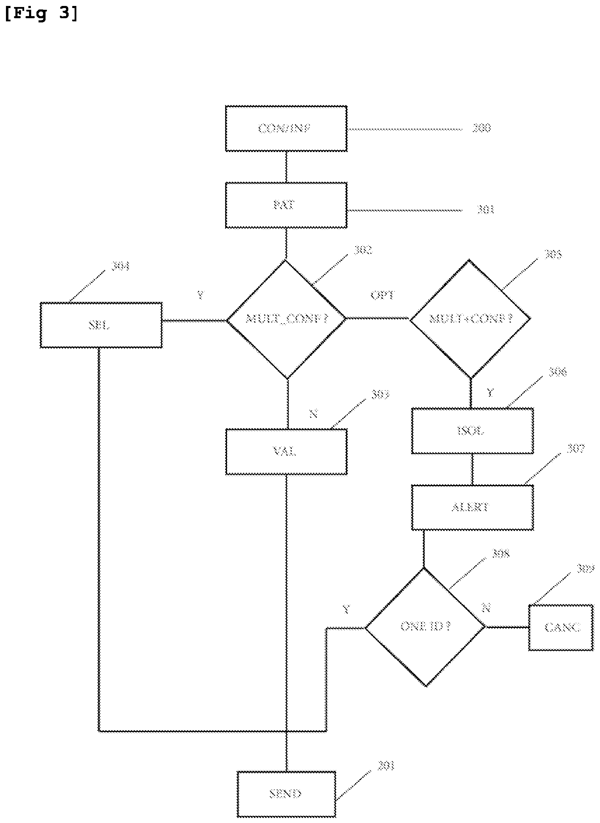

La figure 3 présente des étapes de traitement d'une requête pour au moins un patient par la plateforme 100, notamment pour la gestion de conflits d'identités, selon un mode de réalisation de l'invention. Un tel traitement peut être appliqué entre les étapes 200 et 201 décrites précédemment.

Pour rappel, à l'étape 200, la plateforme 100 peut recevoir une requête d'obtention de données de consentement pour au moins un patient, depuis la base de données 110. En variante, la plateforme 100 reçoit une requête de transmission d'une notification d'informations à au moins un patient.

Ainsi, un professionnel de santé peut, via la base de données 110 et la plateforme 100, soit requérir le consentement d'un patient, soit transmettre à un patient une notification d'informations. Aucune restriction n'est attachée aux informations associées à la notification, qui peuvent être relatives à l'exploitation des données personnelles de santé stockées dans la base de données 110 par exemple.

Aucune restriction n'est attachée à la manière dont le professionnel de santé communique avec la base de données 110. L'étape 200 peut faire suite au renseignement d'un formulaire par le professionnel de santé, le formulaire précisant s'il s'agit d'une requête en consentement ou d'une requête d'envoi d'une notification d'information. S'il s'agit d'une requête en consentement, la base de données 110 permet au professionnel de santé d'ajouter une question que le patient peut accepter ou refuser. S'il s'agit au contraire d'une requête d'envoi de notification d'informations, la base de données 110 ne permet pas au professionnel de santé de changer le texte que le patient peut accepter ou refuser.

La base de données 110 peut permettre au professionnel de santé d'ajouter des fichiers, vidéos et audios par exemple, ou une notice d'information complémentaire des informations notifiées.

Le professionnel de santé peut en outre spécifier le type d'envoi de la requête, par exemple par SMS, par mail, ou par courrier avec un QR code pour accéder à la plateforme 100.

Enfin, la base de données 110 permet au professionnel de santé de spécifier des données de contact du patient, ou d'une liste de patients. Les données de contact peuvent comprendre une adresse, une adresse mail et/ou un numéro de téléphone mobile.

Ainsi, à l'étape 200, la plateforme 100 reçoit une requête avec des données de contact d'au moins un patient. Dans ce qui suit, il est considéré que la requête est à destination d'un unique patient, pour simplifier la description. On comprendra toutefois que l'invention peut tout aussi bien s'appliquer à une liste de patients, auquel cas les étapes sont dupliquées pour chaque patient de la liste de patients.

A une étape 301 faisant suite à l'étape 200, la plateforme 100 stocke la requête reçue, ainsi que l'identité de patient associé à la requête. Aucune restriction n'est attachée aux données descriptives de l'identité du patient, qui peut comprendre un patronyme, une date de naissance, une séquence alphanumérique, ou toute autre donnée.

A une étape 302, la plateforme 100 vérifie si l'identité du patient correspond à une identité précédemment stockée. Autrement dit, la plateforme 100 procède à une vérification d'identités multiples.

Si aucune identité multiple n'est détectée, la plateforme 100 met en œuvre une étape 303 de validation de l'identité unique du patient. La plateforme 100 passe alors à l'étape 201 décrite précédemment et envoie une demande de consentement, ou une notification d'informations si une requête d'envoi de notification d'information a été reçue à l'étape 200, au terminal 140 du patient via la première interface 130.

Si une identité multiple est détectée, sans conflit d'identité, la plateforme 100 met en œuvre une étape 304 de sélection de l'identité du patient la plus complète. Deux identités ne sont pas en conflit si les données qu'elles contiennent ne se contredisent pas. C'est notamment le cas lorsqu'une identité de patient comprend plus de données, est plus complète, qu'une autre identité de patient. La plateforme 100 passe alors à l'étape 201 décrite précédemment et envoie une demande de consentement, ou une notification informations si une requête d'envoi de notification d'informations a été reçue à l'étape 200, au terminal 140 du patient dont l'identité a été sélectionnée via la première interface 130.

Sinon, la plateforme 100 vérifie à une étape 305 si un conflit d'identité existe entre les identités multiples. En cas de confirmation du conflit d'identité, la plateforme 100 isole les identités en conflit à une étape 306 et envoie à une étape 307 une alerte au professionnel, afin que le professionnel valide l'une des identités en conflit.

A une étape 308, la plateforme 100 vérifie qu'au moins une des identités en conflit est validée par le professionnel. Si au moins une identité est validée par le professionnel, la plateforme 100 passe alors à l'étape 201 décrite précédemment et envoie une demande de consentement, ou une notification d'informations si une requête d'envoi de notification d'informations a été reçue à l'étape 200, au terminal 140 du patient via la première interface 130.

Dans le cas contraire, si aucune des identités en conflit n'est validée par le professionnel, la plateforme supprime le patient de la liste de patients, et n'envoie pas de demande de consentement ou de notification d'information audit patient. Une notification peut être envoyée au professionnel de santé via la base de données 110 pour indiquer de l'impossibilité de déterminer avec certitude l'identité du patient.

Les étapes de la figure 3 permettent avantageusement de vérifier des conflits entre identités d'un même patient. Il en résulte que les étapes 201 et suivantes de la figure 2 ne sont mises en œuvre qu'une fois l'identité du patient validée. Ainsi, les échanges dans le réseau sont minimisés, ainsi que les temps de calcul dans les entités du réseau.

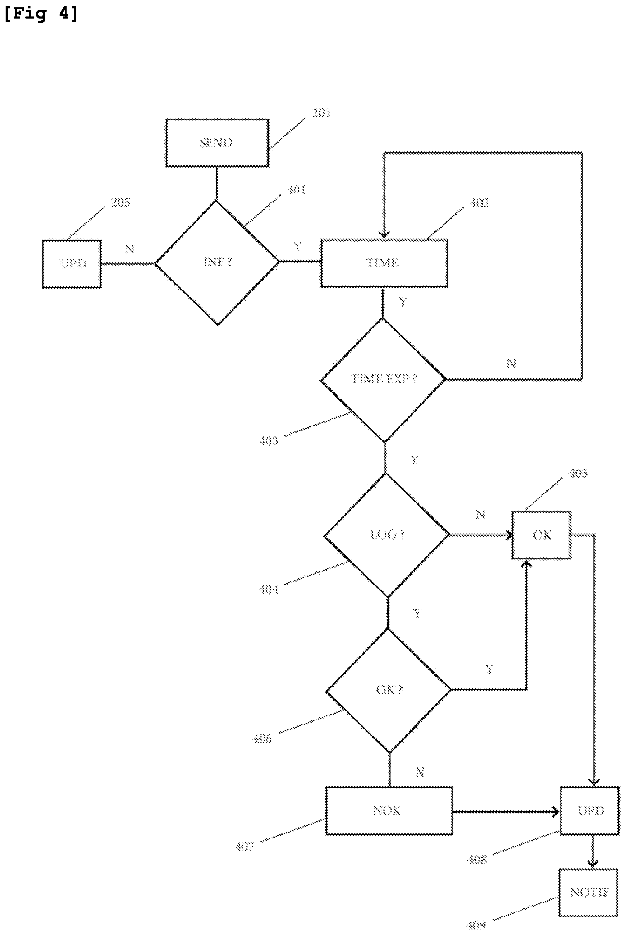

La figure 4 présente des étapes d'un traitement différencié entre traitement d'une demande de consentement et traitement d'une notification d'informations à un patient, selon un mode de réalisation de l'invention.

Suite à l'étape 201 décrite précédemment, la plateforme 100 détermine si une demande de consentement ou une notification d'informations a été envoyée à l'étape 201.

Si une demande de consentement a été envoyée à l'étape 201, la plateforme 100 met en œuvre les étapes 205 et suivantes précédemment décrites. Comme expliqué en référence à la figure 2, le patient peut alors consentir ou refuser de consentir, de manière explicite via le terminal utilisateur 140. Si aucun consentement ou refus explicite n'est reçu (absence de mise en œuvre des étapes 209 et 213 précédemment décrites), la plateforme 100 peut indiquer que le patient n'a pas consenti dans la liste de patients. Une telle information peut être stockée dans la plateforme ou peut être transmise à la base de données 110.

Si une notification d'informations a été envoyée à l'étape 201, la plateforme 100 peut démarrer un chronomètre/minuteur à une étape 402.

La plateforme 100 vérifie, de manière régulière par exemple, à une étape 403 si le chronomètre a atteint une durée prédéterminée, par exemple quelques semaines.

Si tel n'est pas le cas, le chronomètre/minuteur se poursuit.

Si la durée prédéterminée est atteinte, la plateforme 100 vérifie si le patient s'est connecté à la plateforme 100 entre l'étape 402 et l'étape 403.

Si le patient ne s'est pas connecté à la plateforme 100, la plateforme 100 indique à une étape 405 que la notification d'informations a été acceptée de manière implicite. Une telle indication peut être stockée à une étape 408 par la plateforme 100 et/ou notifiée à la base de données 110 à une étape 409. Le traitement est ainsi différencié par rapport à celui appliqué à une demande de consentement, pour laquelle le consentement ne peut pas être implicite.

Si le patient s'est connecté à la plateforme 100 entre l'étape 402 et 403, la plateforme 100 vérifie si le patient s'est opposé de manière explicite à l'information. Si tel n'est pas le cas, la plateforme 100 indique à une étape 405 que la notification d'information a été acceptée de manière implicite, et stocke une telle indication dans la plateforme 100 à l'étape 408 ou notifie une telle indication à la base de données 110 à l'étape 409.

Si le patient s'est opposé de manière explicite à la notification d'informations, la plateforme 100 indique à une étape 407 que l'information a été refusée et stocke à l'étape 408 une telle indication dans la plateforme 100 ou communique à l'étape 409 une telle indication à la base de données 110.

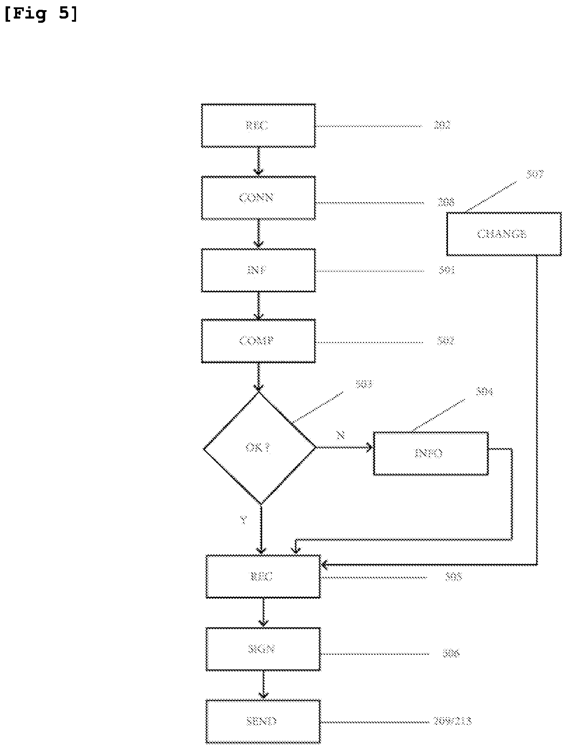

La figure 5 illustre les étapes d'un procédé d'acceptation/refus mis en œuvre sur réception d'une demande de consentement ou d'une notification d'informations à l'étape 202 décrite précédemment.

A l'étape 202, le terminal utilisateur 140 reçoit une demande de consentement ou une notification d'informations à l'attention du patient, via la première interface 130. Une telle demande de consentement ou notification d'informations peut être reçue par SMS ou par mail et peut comprendre un lien pour accéder à la plateforme 100.

A l'étape 208 déjà décrite, le patient se connecte à la plateforme 100 via la première interface 130. Soit le patient est déjà inscrit sur la plateforme 100, auquel cas il accède à son espace via une identification/authentification, soit le patient accède à la plateforme 100 pour la première fois et il crée un compte en fournissant des données personnelles.

A une étape 501, le terminal utilisateur 140 accède sur la plateforme 100 à une notice d'informations au patient. La notice d'informations permet d'assurer une compréhension suffisante du patient, préalablement au recueil du consentement/refus de consentir ou de l'accord/refus de la notification d'informations.

A une étape 502, le terminal utilisateur 140 met en œuvre une étape de vérification d'un niveau de compréhension suffisant par le patient. Une telle mise en œuvre peut consister en un formulaire comprenant des questions permettant d'évaluer le niveau de compréhension du patient.

A une étape 503, il est vérifié si le niveau de compréhension du patient est suffisant. Si tel n'est pas le cas, le terminal utilisateur 140 peut afficher des informations complémentaires en vue d'améliorer la compréhension du patient. Le patient sélectionne à une étape 505 une réponse parmi une acceptation ou un refus du consentement ou de la notification d'informations.

Si le niveau de compréhension du patient est suffisant, le patient sélectionne la réponse à l'étape 505.

A une étape 506, le patient peut signer la réponse sur le terminal utilisateur 140.

Le procédé passe ensuite aux étapes 209 ou 213 décrites précédemment, la réponse signée par le patient est envoyée à la plateforme 100.

Le procédé peut ultérieurement comprendre un changement de réponse du patient. A cet effet, le patient réclame de changer sa réponse sur le terminal utilisateur à une étape 507. Le patient peut alors sélectionner une réponse à l'étape 505.

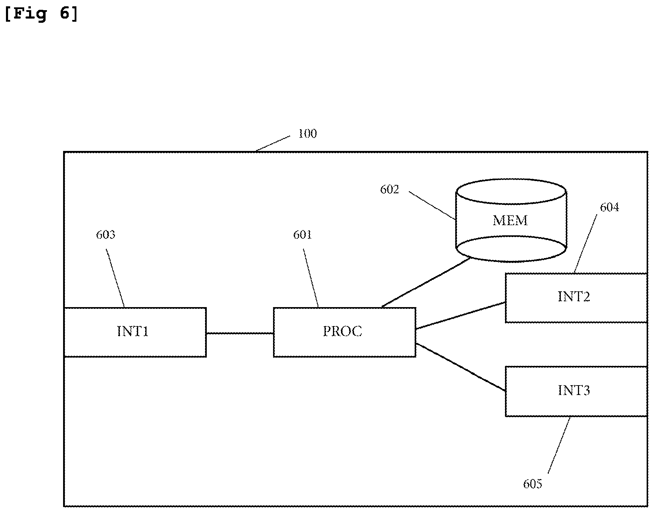

La figure 6 présente une structure d'une plateforme 100 selon un mode de réalisation de l'invention.

La plateforme 100 comprend un processeur 601 configuré pour communiquer de manière unidirectionnelle ou bidirectionnelle, via un ou des bus ou via une connexion filaire directe, avec une mémoire 602 telle qu'une mémoire de type « Random Access Memory », RAM, ou une mémoire de type « Read Only Memory », ROM, ou tout autre type de mémoire (Flash, EEPROM, etc). En variante, la mémoire 602 comprend plusieurs mémoires des types précités.

La mémoire 602 est apte à stocker, de manière permanente ou temporaire, au moins certaines des données utilisées et/ou issues de la mise en œuvre du procédé selon l'invention. En particulier, la mémoire 602 peut stocker, de manière temporaire ou permanente, les données de contact des patients, notamment une liste de patients, ainsi que les réponses des patients, c'est à dire leurs données de consentement, ainsi que les statuts de consentement déduits de ces données de consentement et stockés dans le registre distribué.

Le processeur 601 est apte à exécuter des instructions, stockées dans la mémoire 602, pour la mise en œuvre des étapes 200, 201, 203, 204 à 220 de la figure 2, de l'ensemble des étapes des figures 3 et 4. De manière alternative, le processeur 601 peut être remplacé par un microcontrôleur conçu et configuré pour réaliser les étapes précitées.

La plateforme 100 comprend une première interface réseau 603 agencée pour communiquer avec la base de données 110.

La plateforme 100 comprend une deuxième interface réseau 604 agencée pour communiquer avec la première interface 130.

La plateforme 100 comprend une troisième interface réseau 605 agencée pour communiquer avec le registre distribué 120.

La présente invention ne se limite pas aux formes de réalisation décrites ci-avant à titre d'exemples ; elle s'étend à d'autres variantes.

## Revendications

1. Procédé de traitement de données de consentement mis en œuvre par un système comprenant une plateforme informatique (100), une base de données (110) et un registre distribué (120) à chaîne de blocs, et comprenant les opérations suivantes :
• suite au stockage de données personnelles de santé d'un patient dans la base de données (110), réception (200) d'un identifiant du patient par la plateforme informatique depuis la base de données;
• suite à la réception de l'identifiant du patient, transmission (201) par la plateforme informatique d'une demande de consentement audit patient identifié, ajout (205), par la plateforme informatique, d'une information de demande de consentement dans le registre distribué (120) à chaîne de blocs, afin de prouver la transmission de la demande de consentement au patient identifié, et notification (207) par la plateforme informatique, à la base de données, de l'ajout de l'information de demande de consentement dans le registre distribué ;
• sur réception (209 ; 213), depuis le patient, d'une sélection de données de consentement, par la plateforme informatique, suite à la transmission de la demande de consentement et à l'ajout de l'information de demande de consentement dans le registre distribué à chaîne de blocs, mise à jour (210; 214) d'un statut de consentement correspondant aux données de consentement dans le registre distribué par la plateforme informatique ;
• suite à la mise à jour du statut de consentement correspondant aux données de consentement dans le registre distribué, notification (212 ; 216 ), par la plateforme informatique, du statut de consentement mis à jour à la base de données, pour mise à jour d'un statut des données personnelles de santé stockées dans la base de données ;
• sur réception (217), par la plateforme informatique, depuis la base de données, d'une demande de statut de consentement associée au patient, après la notification de l'ajout de l'information de demande de consentement dans le registre distribué, consultation (218), par la plateforme informatique, du registre distribué à chaîne de blocs pour obtenir le statut de consentement mis à jour correspondant aux données de consentement du patient, et transmission (220) du statut de consentement mis à jour obtenu à la base de données ;
dans lequel les données de consentement du patient comprennent un consentement du patient ou un refus de consentir à l'utilisation des données personnelles de santé stockées dans la base de données.

2. Procédé selon la revendication 1, dans lequel suite à une réception (209) de premières données de consentement, par la plateforme informatique (100) et à une première mise à jour (210) du statut de consentement dans le registre distribué par la plateforme informatique, le procédé comprend en outre une réception (213), par la plateforme informatique, de deuxièmes données de consentement différentes des premières données de consentement, et une deuxième mise à jour (214), par la plateforme informatique, du statut de consentement dans le registre distribué.

3. Procédé selon l'une des revendications précédentes, dans lequel la transmission (201 ; 202), par la plateforme informatique (100), de la demande de consentement au patient identifié est conditionnée par une vérification (302 ; 305), par la plateforme informatique, de conflit d'identité et/ou d'identités multiples du patient.

4. Procédé selon la revendication 3, dans lequel en cas de conflit d'identité de l'identité du patient, une alerte est transmise (307) par la plateforme informatique (100) au professionnel, dans lequel l'alerte propose une sélection d'une identité unique parmi des identités du patient en conflit.

5. Procédé selon la revendication 3 ou 4, dans lequel, en cas d'identités multiples du patient, le procédé comprend en outre une sélection (304) de l'identité du patient comprenant le plus de données par la plateforme (100).

6. Procédé selon l'une des revendications précédentes, comprenant en outre une étape préalable de chargement d'une liste de contacts de patients dans la base de données, et dans lequel une demande de consentement est transmise à chaque patient de la liste de contacts.

7. Programme informatique comportant des instructions pour la mise en œuvre du procédé selon l'une quelconque des revendications précédentes, lorsque ces instructions sont exécutées par un système selon la revendication 8.

8. Système comprenant une plateforme informatique (100), une base de données (110) et un registre distribué (120) à chaîne de blocs, le système étant configuré à:
- recevoir par une première interface réseau de la plateforme informatique un identifiant du patient depuis la base de données (110), suite au stockage de données personnelles de santé du patient dans la base de données;
- transmettre par une deuxième interface réseau de la plateforme informatique, suite à la réception de l'identifiant du patient, une demande de consentement audit patient identifié ;
- ajouter par un processeur (601) de la plateforme informatique, suite à la réception de l'identifiant du patient, via une troisième interface réseau (605), une information de demande de consentement dans le registre distribué (120) à chaîne de blocs, afin de prouver la transmission de la demande de consentement au patient identifié et à notifier, à la base de données, l'ajout de l'information de demande de consentement dans le registre distribué ;
dans lequel la plateforme est en outre apte à recevoir d'une sélection de données de consentement du patient suite à la transmission de la demande de consentement et à l'ajout de l'information de demande de consentement dans le registre distribué à chaîne de blocs , et le processeur est apte à mettre à jour un statut de consentement correspondant aux données de consentement dans le registre distribué et à notifier, suite à la mise à jour du statut de consentement correspondant aux données de consentement dans le registre distribué, le statut de consentement mis à jour à la base de données via la première interface, pour mise à jour d'un statut des données personnelles de santé stockées dans la base de données;
dans lequel la plateforme est en outre apte, sur réception (217) depuis la base de données d'une demande de statut de consentement associée au patient, après la notification de l'ajout de l'information de demande de consentement dans le registre distribué, à consulter le registre distribué à chaîne de blocs pour obtenir le statut de consentement mis à jour correspondant aux données de consentement du patient, et à transmettre le statut de consentement mis à jour obtenu à la base de données;
dans lequel les données de consentement du patient comprennent un consentement du patient ou un refus de consentir à l'utilisation des données personnelles de santé stockées dans la base de données.

## Patentansprüche

1. Verfahren zum Verarbeiten von Einwilligungsdaten, das durch ein System implementiert wird, umfassend eine Computerplattform (100), eine Datenbank (110) und ein Blockchain-Distributed-Ledger (120), und umfassend die folgenden Vorgänge:
• nach einem Speichern persönlicher Gesundheitsdaten eines Patienten in der Datenbank (110), Empfangen (200) einer Kennung des Patienten durch die Computerplattform aus der Datenbank;
• nach dem Empfangen der Kennung des Patienten, Übertragen (201) durch die Computerplattform einer Einwilligungsanfrage an den identifizierten Patienten, Hinzufügen (205), durch die Computerplattform, von Informationen über die Einwilligungsanfrage zu dem Blockchain-Distributed-Ledger (120), um die Übertragung der Einwilligungsanfrage an den identifizierten Patienten nachzuweisen, und Melden (207) durch die Computerplattform, an die Datenbank, des Hinzufügens der Informationen über die Einwilligungsanfrage zu dem Distributed-Ledger;
• bei dem Empfangen (209; 213), von dem Patienten, einer Auswahl von Einwilligungsdaten, durch die Computerplattform, nach dem Übertragen der Einwilligungsanfrage und dem Hinzufügen der Informationen über die Einwilligungsanfrage zu dem Blockchain-Distributed-Ledger, Aktualisieren (210; 214) eines Einwilligungsstatus, der den Einwilligungsdaten in dem Distributed-Ledger entspricht, durch die Computerplattform;
• nach dem Aktualisieren des Einwilligungsstatus, der den Einwilligungsdaten in dem Distributed-Ledger entspricht, Melden (212; 216), durch die Computerplattform, des aktualisierten Einwilligungsstatus an die Datenbank zum Aktualisieren eines Status der persönlichen Gesundheitsdaten, die in der Datenbank gespeichert sind;
• bei dem Empfangen (217), durch die Computerplattform, von der Datenbank, einer Einwilligungsstatusanfrage, die mit dem Patienten verknüpft ist, nach dem Melden des Hinzufügens der Informationen über die Einwilligungsanfrage zu dem Distributed-Ledger, Konsultieren (218), durch die Computerplattform, des Blockchain-Distributed-Ledgers zum Erhalten des aktualisierten Einwilligungsstatus, der den Einwilligungsdaten des Patienten entspricht, und Übertragen (220) des erhaltenen aktualisierten Einwilligungsstatus an die Datenbank;
wobei die Einwilligungsdaten des Patienten eine Einwilligung des Patienten oder eine Verweigerung eines Einwilligens zu der Verwendung der persönlichen Gesundheitsdaten umfassen, die in der Datenbank gespeichert sind.

2. Verfahren nach Anspruch 1, wobei, nach einem Empfangen (209) von ersten Einwilligungsdaten, durch die Computerplattform (100), und einem ersten Aktualisieren (210) des Einwilligungsstatus in dem Distributed-Ledger durch die Computerplattform, das Verfahren ferner ein Empfangen (213), durch die Computerplattform, von zweiten Einwilligungsdaten, die sich von den ersten Einwilligungsdaten unterscheiden, und ein zweites Aktualisieren (214), durch die Computerplattform, des Einwilligungsstatus in dem Distributed-Ledger umfasst.

3. Verfahren nach einem der vorstehenden Ansprüche, wobei das Übertragen (201; 202), durch die Computerplattform (100), der Einwilligungsanfrage an den identifizierten Patienten durch ein Überprüfen (302; 305), durch die Computerplattform, auf einen Identitätskonflikt und/oder Mehrfachidentitäten des Patienten bedingt ist.

4. Verfahren nach Anspruch 3, wobei im Falle des Identitätskonflikts der Identität des Patienten eine Warnung durch die Computerplattform (100) an die Fachperson übertragen wird (307), wobei die Warnung eine Auswahl einer eindeutigen Identität unter den Identitäten des Patienten in dem Konflikt vorschlägt.

5. Verfahren nach Anspruch 3 oder 4, wobei das Verfahren im Falle mehrerer Identitäten des Patienten ferner ein Auswählen (304) der Identität des Patienten, umfassend die meisten Daten, durch die Plattform (100) umfasst.

6. Verfahren nach einem der vorstehenden Ansprüche, ferner umfassend einen vorherigen Schritt eines Ladens einer Liste von Patientenkontakten in die Datenbank, und wobei eine Einwilligungsanfrage an jeden Patienten auf der Kontaktliste übertragen wird.

7. Computerprogramm, das Anweisungen für die Implementierung des Verfahrens nach einem der vorstehenden Ansprüche aufweist, wenn diese Anweisungen durch ein System nach Anspruch 8 ausgeführt werden.

8. System, umfassend eine Computerplattform (100), eine Datenbank (110) und ein Blockchain-Distributed-Ledger (120), wobei das System konfiguriert ist zum:
- Empfangen durch eine erste Netzwerkschnittstelle der Computerplattform einer Kennung des Patienten aus der Datenbank (110), nach dem Speichern der persönlichen Gesundheitsdaten des Patienten in der Datenbank;
- Übertragen durch eine zweite Netzwerkschnittstelle der Computerplattform, nach dem Empfangen der Kennung des Patienten, einer Einwilligungsanfrage an den identifizierten Patienten;
- Hinzufügen durch einen Prozessor (601) der Computerplattform nach dem Empfangen der Kennung des Patienten, über eine dritte Netzwerkschnittstelle (605), von Informationen über die Einwilligungsanfrage zu dem Blockchain-Distributed-Ledger (120), um die Übertragung der Einwilligungsanfrage an den identifizierten Patienten nachzuweisen und das Hinzufügen der Informationen über die Einwilligungsanfrage zu dem Blockchain-Distributed-Ledger an die Datenbank zu melden; wobei die Plattform ferner geeignet ist, um eine Auswahl von Einwilligungsdaten des Patienten nach dem Übertragen der Einwilligungsanfrage und dem Hinzufügen der Informationen über die Einwilligungsanfrage zu dem Blockchain-Distributed-Ledger zu empfangen, und der Prozessor geeignet ist, um einen Einwilligungsstatus, der den Einwilligungsdaten in dem Blockchain-Distributed-Ledger entspricht, zu aktualisieren, nach dem Aktualisieren des Einwilligungsstatus, der den Einwilligungsdaten entspricht, den aktualisierten Einwilligungsstatus an die Datenbank über die erste Schnittstelle zum Aktualisieren eines Status der persönlichen Gesundheitsdaten zu melden, die in der Datenbank gespeichert sind;
wobei die Plattform ferner geeignet ist, um bei dem Empfangen (217) aus der Datenbank einer Einwilligungsstatusanfrage, die mit dem Patienten verknüpft ist, nach dem Melden des Hinzufügens der Informationen über die Einwilligungsanfrage zu dem Distributed-Ledger, das Blockhain-Distributed-Ledger zum Erhalten des aktualisierten Einwilligungsstatus zu konsultieren, der den Einwilligungsdaten des Patienten entspricht, und um den erhaltenen aktualisierten Einwilligungsstatus an die Datenbank zu übertragen;
wobei die Einwilligungsdaten des Patienten eine Einwilligung des Patienten oder eine Verweigerung des Einwilligens zu der Verwendung der persönlichen Gesundheitsdaten umfassen, die in der Datenbank gespeichert sind.

## Claims

1. Method for processing consent data, the method being implemented by a system which includes a computer platform (100), a database (110) and a blockchain distributed ledger (120), and the method including the following operations:
• following storage of personal health data of a patient in the database (110), receipt (200) of an identifier of the patient by the computer platform from the database;
• following the receipt of the identifier of the patient, transmission (201) by the computer platform of a consent request to said identified patient, addition (205), by the computer platform, of an item of consent request information to the blockchain distributed ledger (120), in order to prove the transmission of the consent request to the identified patient, and notification (207) by the computer platform, to the database, of the addition of the item of consent request information to the distributed ledger;
• on receipt (209; 213), from the patient, of a selection of consent data, by the computer platform, following the transmission of the consent request and the addition of the item of consent request information to the blockchain distributed ledger, updating (210; 214) of a consent status corresponding to the consent data in the distributed ledger by the computer platform;
• following the update of the consent status corresponding to the consent data in the distributed register, notification (212; 216), by the computer platform, of the updated consent status to the database, in order to update a status of the personal health data stored in the database;
• on receipt (217), by the computer platform, from the database, of a consent status request associated with the patient, after the notification of the addition of the item of consent request information to the distributed ledger, consultation (218), by the computer platform, of the blockchain distributed ledger to obtain the updated consent status corresponding to the consent data of the patient, and transmission (220) of the updated consent status obtained to the database,
wherein the consent data of the patient include consent of the patient or refusal to consent to the use of the personal health data stored in the database.

2. Method according to claim 1, wherein following receipt (209) of first consent data by the computer platform (100) and a first update (210) of the consent status in the distributed ledger by the computer platform, the method further includes receipt (213), by the computer platform, of second consent data different from the first consent data, and a second update (214), by the computer platform, of the consent status in the distributed ledger.

3. Method according to one of the preceding claims, wherein the transmission (201; 202), by the computer platform (100), of the request for consent to the identified patient is conditioned by a verification (302; 305), by the computer platform, of identity conflict and/or multiple identities of the patient.

4. Method according to claim 3, wherein in the event of identify conflict of the identity of the patient, an alert is transmitted (307) by the computer platform (100) to the professional, wherein the alert proposes a selection of a unique identity from the conflicting identities of the patient.

5. Method according to claim 3 or 4, wherein, in the event of multiple identities of the patient, the method further includes a selection (304) of the identity of the patient including the most data by the platform (100).

6. Method according to one of the preceding claims, further including a prior step of loading a list of patient contacts into the database, and wherein a consent request is transmitted to each patient on the contact list.

7. Computer program comprising instructions for implementing the method according to one of the preceding claims, when these instructions are executed by a system according to claim 8.

8. System including a computer platform (100), a database (110) and a blockchain distributed ledger (120), the system being configured to:
- receive, by means of a first network interface of the computer platform, an identifier of the patient from the database (110), following storage of the personal health data of the patient in the database;
- transmit, by means of a second network interface of the computer platform, following the receipt of the identifier of the patient, a consent request to the identified patient;
- add, by means of a processor (601) of the computer platform, following the receipt of the identifier of the patient, via a third network interface (605), an item of consent request information to the blockchain distributed ledger (120), in order to prove the transmission of the consent request to the identified patient and to notify, to the database, the addition of the item of consent request information to the distributed ledger, wherein the platform is further capable of receiving a selection of consent data of the patient following the transmission of the consent request and the addition of the item of consent request information to the blockchain distributed ledger, and the processor is capable of updating a consent status corresponding to the consent data in the distributed ledger and of notifying, following the update of the consent status corresponding to the consent data in the distributed ledger, the updated consent status to the database via the first interface, in order to update a status of the personal health data stored in the database,
wherein the platform is further capable, on receipt (217) from the database of a consent status request associated with the patient, after the notification of the addition of the item of consent request information to the distributed ledger, of consulting the blockchain distributed ledger to obtain the updated consent status corresponding to the consent data of the patient, and of transmitting the updated consent status obtained to the database,
wherein the consent data of the patient include consent of the patient or refusal to consent to the use of the personal health data stored in the database.
